# FASCICULE DE BREVET EUROPEEN

(11) **EP 4 003 840 B1**
(45) Date de publication et mention de la délivrance du brevet: **30.08.2023**
(21) Numéro de dépôt: 20757640.6
(22) Date de dépôt: 24.07.2020
(51) Int. Cl.: B64D 13/06

(54) **SYSTÈME DE CONDITIONNEMENT D'AIR À RÉCUPÉRATION D'AIR CABINE**
KLIMAANLAGENSYSTEM MIT KABINENLUFTRÜCKGEWINNUNG
AIR CONDITIONING SYSTEM WITH CABIN AIR RECOVERY

(30) Priorité: 25.07.2019 FR 1908460
(43) Date de publication de la demande: 01.06.2022
(73) Titulaire: Liebherr-Aerospace Toulouse SAS, 31200 Toulouse (FR)
(72) Inventeur: GALZIN, Guillaume, 31016 TOULOUSE Cedex 2 (FR); BOYE, Cédric, 31016 TOULOUSE Cedex 2 (FR)
(74) Mandataire: Bringer IP
(86) Numéro de dépôt international: PCT/FR2020/051357
(87) Numéro de publication internationale: WO 2021/014106

(56) Documents cités:
- EP-A1- 3 254 970
- EP-A1- 3 342 709
- EP-A1- 3 401 223
- EP-A1- 3 421 364
- US-A- 6 128 909

## Description

### Domaine technique de l'invention

L'invention concerne un système de conditionnement d'air comprenant un système de récupération d'énergie et de puissance froide. En particulier, l'invention concerne un système de conditionnement d'air d'une cabine d'un aéronef, comprenant un système de récupération d'énergie et de puissance froide provenant d'un air ayant circulé dans la cabine.

### Arrière-plan technologique

Dans un aéronef, le système de conditionnement d'air permet le traitement de l'air destiné notamment à alimenter la cabine de l'aéronef. Le traitement de l'air consiste notamment en un ajustement de la température, de la pression, de l'humidité, etc. d'un air provenant d'une source d'air de l'aéronef, par exemple de l'air prélevé sur les moteurs, communément appelé air bleed.

Dans tout le texte, le terme « cabine » désigne tout espace intérieur d'un aéronef dont la pression et/ou la température de l'air doit être contrôlée. Il peut s'agir d'une cabine pour passagers, du cockpit de pilotage, d'une soute, et de manière générale de toute zone de l'aéronef qui nécessite un air à une pression et/ou une température contrôlée.

Dans un aéronef de type subsonique, l'air dynamique servant pour le refroidissement peut provenir notamment de l'air extérieur, dont la température au contact du fuselage de l'aéronef (appelée température de peau) est faible (maximum 0°C), ce qui permet de faciliter le conditionnement d'air.

Dans un aéronef de type supersonique, lorsque l'aéronef est en vol supersonique, la vitesse élevée de l'aéronef entraîne une augmentation conséquente de la température de peau qui peut atteindre 52°C à mach 1.4, 78°C à mach 1.6, 140°C à mach 2.0. L'air dynamique est donc à une température plus élevée.

Le besoin en puissance froide du système de conditionnement d'air d'un aéronef supersonique est donc fortement augmenté par rapport à un aéronef subsonique. On appelle puissance froide la capacité d'un fluide à servir de source froide pour refroidir un autre fluide plus chaud.

Les solutions actuelles consistent à utiliser le fuel de l'aéronef comme source froide. D'autres solutions proposent l'utilisation d'un circuit à fluide réfrigérant.

Ces solutions entraînent une augmentation de la complexité du système de conditionnement d'air par la nécessité d'utiliser un fluide extérieur tel que le fuel ou un fluide réfrigérant.

Les inventeurs ont cherché à utiliser une nouvelle source de puissance froide dans le système de conditionnement d'air, notamment pour une utilisation dans un aéronef supersonique. Le document EP3342709 décrit un procédé et un dispositif de contrôle environnemental de cabine d'aéronef. Un prélèvement d'air de compresseur de moteur de l'aéronef à une unique valeur intermédiaire de pression est relié à une entrée d'un compresseur d'un turbocompresseur intermédiaire, une sortie d'air de ce compresseur est reliée à une entrée d'une turbomachine à cycle à air, une sortie de la turbomachine à cycle à air est reliée à la cabine, une entrée d'une turbine du turbocompresseur intermédiaire couplée au compresseur reçoit de l'air en provenance de la cabine, et la pression de l'air délivré à la sortie d'air du compresseur du turbocompresseur intermédiaire est limitée à une valeur maximale prédéterminée.

Le document US6128909 décrit un système de contrôle de l'environnement qui prévoit une compression et une expansion en deux étapes dans un cycle de refroidissement, tout en permettant à un ventilateur entraîné séparément d'utiliser l'air ambiant pour refroidir à l'aide d'échangeurs de chaleur. Le système comprend une pluralité de compresseurs capables de comprimer l'air contenant de la vapeur d'eau pour produire de l'air comprimé. Un réchauffeur est capable de refroidir l'air comprimé. Un condenseur est en communication avec le réchauffeur, le condenseur étant capable de condenser la vapeur d'eau. Un extracteur d'eau est en communication avec et entre le condenseur et le réchauffeur. Une pluralité de turbines sont en communication avec le réchauffeur et en aval de celui-ci.

### Objectifs de l'invention

L'invention vise à fournir un système de conditionnement d'air permettant la fourniture d'une source froide supplémentaire.

L'invention vise en particulier à fournir, dans au moins un mode de réalisation, un système de conditionnement d'air optimisé pour un aéronef supersonique, notamment pendant les phases de vols supersoniques.

L'invention vise aussi à fournir, dans au moins un mode de réalisation de l'invention, un système de conditionnement d'air permettant une récupération d'énergie de l'air cabine.

### Exposé de l'invention

Pour ce faire, l'invention concerne un système de conditionnement d'air d'une cabine d'un aéronef, comprenant :
- un échangeur primaire configuré pour refroidir un air prélevé provenant d'au moins un compresseur de l'aéronef,
- un pré-compresseur configuré pour pré-compresser l'air prélevé refroidi,
- un échangeur intermédiaire, configuré pour refroidir l'air pré-compressé provenant du pré-compresseur,
- un compresseur principal configuré pour recevoir ledit air prélevé pré-compressé refroidi par l'échangeur intermédiaire et compresser celui-ci,
- un échangeur principal configuré pour refroidir l'air prélevé compressé par un air dynamique prélevé à l'extérieur de l'aéronef, et
- une boucle d'extraction d'eau intégrant une turbine principale et configurée pour extraire l'eau de l'air prélevé compressé refroidi et alimenter la cabine de l'aéronef, caractérisé en ce qu'il comprend une conduite de récupération d'au moins une partie de l'air de la cabine après son passage dans la cabine, et des conduites de circulation de l'air récupéré configurées pour que l'air récupéré traverse, successivement :
   - un échangeur secondaire, l'air récupéré formant une première source froide dans ledit échangeur secondaire pour refroidir de nouveau l'air prélevé en aval de l'échangeur principal et en amont de la boucle d'extraction d'eau,
   - un échangeur thermique, l'air récupéré formant une deuxième source froide dans ledit échangeur thermique pour refroidir l'air prélevé en amont ou en aval du pré-compresseur, l'échangeur thermique étant soit formé par l'échangeur intermédiaire et une source froide de l'échangeur primaire est formée par l'air dynamique, soit formé par l'échangeur primaire et une source froide de l'échangeur intermédiaire est formée par l'air dynamique,
   - une turbine de récupération d'énergie, l'air récupéré formant une source d'énergie suite à son passage dans l'échangeur secondaire puis l'échangeur thermique.

Un système de conditionnement d'air selon l'invention permet donc, grâce à la récupération de l'air de la cabine, de combler plusieurs déficiences de l'art antérieur.

Dans un premier temps, l'air récupéré de la cabine est utilisé comme première source froide dans l'échangeur secondaire pour refroidir l'air prélevé en aval de l'échangeur principal. Autrement dit, l'échangeur secondaire comprend deux circuits d'air, un circuit d'air froid alimenté par l'air récupéré de la cabine, et un circuit d'air chaud alimenté par l'air prélevé suite à son passage dans l'échangeur principal.

En effet, dans l'échangeur principal, la source froide est formée de l'air dynamique, communément appelé ram air, provenant de l'extérieur. Cet air dynamique, prélevé à l'extérieur de l'aéronef, est beaucoup plus chaud en vol supersonique qu'en vol supersonique et sa capacité de refroidissement est donc moindre.

Le refroidissement en aval de l'échangeur principal permet d'améliorer le refroidissement de l'air destiné à alimenter la cabine.

Dans un deuxième temps, l'air récupéré de la cabine sert de deuxième source froide en amont, dans l'échangeur primaire, ou en aval, dans l'échangeur intermédiaire, du pré-compresseur. Le pré-compresseur est utilisé pour pré-compresser l'air prélevé de sorte à maximiser l'efficacité du compresseur principal : la compression en deux étapes permet de maximiser l'efficacité du pré-compresseur et du compresseur, chacun fonctionnant dans une plage de pression d'entrée différente. Parmi l'échangeur primaire et l'échangeur intermédiaire, l'échangeur qui n'est pas alimenté par l'air récupéré de la cabine a comme source froide l'air dynamique.

Autrement dit, l'échangeur primaire comprend deux circuits d'air, un circuit d'air froid alimenté par l'air récupéré de la cabine ou l'air dynamique, et un circuit d'air chaud alimenté par l'air prélevé. De même, l'échangeur intermédiaire comprend deux circuits d'air, un circuit d'air froid alimenté par l'air récupéré de la cabine ou l'air dynamique, et un circuit d'air chaud alimenté par l'air prélevé suite à son passage dans le pré-compresseur.

Lorsque l'air prélevé est pré-compressé, sa température augmente. L'utilisation de l'air récupéré de la cabine permet ainsi de soit réduire la température prélevée avant la pré-compression, soit réduire la température après la pré-compression.

Dans un troisième temps, l'air récupéré de la cabine forme une source d'énergie en traversant une turbine de récupération d'énergie pour y être détendu. L'énergie récupérée par la turbine est ainsi utilisée pour alimenter tout autre consommateur d'énergie de l'aéronef.

La récupération d'énergie est particulièrement avantageuse car l'utilisation de l'air récupéré comme première source froide puis deuxième source froide permet une augmentation conséquente de sa température, ce qui augmente la capacité de récupération d'énergie. En particulier, l'air prélevé en amont ou en aval du pré-compresseur est à une température élevée et l'air récupéré est fortement réchauffé lorsqu'il sert de deuxième source froide.

L'architecture du système de conditionnement d'air selon l'invention est donc optimisée pour que l'air récupéré serve à la fois de source de puissance froide en tant que première source froide et deuxième source froide, et que la hausse substantive de la température résultant de cette utilisation comme source froide soit récupérée par une turbine de récupération d'énergie.

En outre, le système de conditionnement d'air obtenu est plus simple et plus fiable que des systèmes utilisant du fuel ou uniquement un circuit de fluide réfrigérant comme source de puissance froide. L'air cabine, parfois appelé air vicié après sa circulation dans la cabine, est une source de puissance froide et de récupération d'énergie particulièrement intéressante car disponible dans l'aéronef.

Bien que le système de conditionnement d'air soit particulièrement performant pour un aéronef capable d'effectuer des vols supersoniques, il peut aussi être utilisé pour un aéronef n'effectuant que des vols subsoniques.

Avantageusement et selon l'invention, la turbine de récupération d'énergie est reliée mécaniquement au pré-compresseur par un arbre de transmission, de sorte que l'énergie récupérée par la turbine de récupération d'énergie soit transmise au pré-compresseur.

Selon cet aspect de l'invention, la récupération d'énergie permet l'alimentation du pré-compresseur ce qui optimise le système de conditionnement d'air. La récupération importante d'énergie permet une pré-compression efficace de l'air en amont du compresseur principal, permettant ainsi un fort taux de détente sur la turbine principale pour augmenter la capacité froide du système de conditionnement d'air.

La pré-compression permet aussi de traiter un même débit d'air avec un compresseur principal moins volumineux, et réduire ainsi l'encombrement total du système de conditionnement d'air.

Avantageusement et selon l'invention, les conduites de circulation de l'air récupéré sont configurées pour que, en sortie de la turbine de récupération d'énergie, au moins une partie de l'air récupéré soit rejetée dans un canal dans lequel circule l'air dynamique, dit canal de circulation d'air dynamique.

Selon cet aspect de l'invention, l'air sortant de la turbine de récupération d'énergie, qui est refroidi en sortie de la turbine, peut être utilisé pour alimenter le canal dans lequel circule l'air dynamique afin de réduire la température de l'air dynamique.

Avantageusement et selon cette dernière variante de l'invention, ladite partie de l'air rejeté dans ledit canal de circulation d'air dynamique est rejetée en aval du passage de l'air dynamique dans l'échangeur principal et en amont du passage de l'air dynamique dans l'échangeur primaire ou l'échangeur intermédiaire.

Selon cet aspect de l'invention, le rejet de l'air sortant de la turbine de récupération d'énergie dans le canal de circulation d'air dynamique entre l'échangeur principal et l'échangeur primaire permet d'optimiser le système de conditionnement d'air car l'air sortant de la turbine de récupération d'énergie a une pression plus proche de la pression de l'air dynamique en sortie de l'échangeur principal qu'en entrée de l'échangeur principal.

Cela permet notamment de réduire le prélèvement à l'extérieur de l'aéronef pour former cet air dynamique. La réduction de ce prélèvement permet de réduire la trainée de l'aéronef, ce qui a un impact très important notamment en vol supersonique.

La réduction de la température avant le passage dans l'échangeur primaire permet une augmentation nette de ses performances.

Le mélange de l'air sortant de la turbine de récupération d'énergie et l'air dynamique entre ces deux échangeurs limite les impacts sur le débit d'air prélevé.

Avantageusement et selon l'invention, les conduites de circulation de l'air récupéré sont configurées pour que, en sortie de la turbine de récupération d'énergie, au moins une partie de l'air récupéré soit destinée au refroidissement d'un circuit haute température de l'aéronef.

Selon cet aspect de l'invention, l'air refroidi en sortie de turbine de récupération d'énergie peut servir de source de refroidissement pour tout circuit haute température nécessitant un refroidissement, par exemple un refroidissement d'un circuit d'huile moteur, etc.

Avantageusement et selon l'invention, l'air fourni par au moins un compresseur de l'aéronef est fourni par au moins un compresseur d'un moteur de l'aéronef.

Selon cet aspect de l'invention, le moteur de l'aéronef est par exemple un moteur propulsif de l'aéronef ou un groupe auxiliaire de puissance. Les moteurs de l'aéronef comprennent généralement un compresseur pour leur fonctionnement et donc peuvent fournir de l'air directement compressé au système de conditionnement d'air.

Avantageusement et selon l'invention, l'air fourni par au moins un compresseur de l'aéronef est fourni par un compresseur alimenté par un moteur électrique.

Selon cet aspect de l'invention, l'air est fourni par un compresseur actionné par un moteur électrique, par exemple dans le cadre de l'utilisation du système de conditionnement d'air dans un aéronef « plus électrique », dans lequel l'énergie est principalement transmise entre les systèmes de façon électrique. Le compresseur est alimenté par exemple par de l'air extérieur et compresse celui-ci.

L'invention concerne également un aéronef comprenant une cabine et un système de conditionnement d'air selon l'invention configuré pour alimenter la cabine en air conditionné.

L'invention concerne également un système de conditionnement d'air et un aéronef, caractérisés en combinaison par tout ou partie des caractéristiques mentionnées ci-dessus ou ci-après.

### Liste des figures

D'autres buts, caractéristiques et avantages de l'invention apparaîtront à la lecture de la description suivante donnée à titre uniquement non limitatif et qui se réfère aux figures annexées dans lesquelles :
[Fig. 1] est une vue schématique d'un système de conditionnement d'air selon un premier mode de réalisation de l'invention.
[Fig. 2] est une vue schématique d'un système de conditionnement d'air selon un deuxième mode de réalisation de l'invention

### Description détaillée d'un mode de réalisation de l'invention

Sur les figures, les échelles et les proportions ne sont pas strictement respectées et ce, à des fins d'illustration et de clarté.

En outre, les éléments identiques, similaires ou analogues sont désignés par les mêmes références dans toutes les figures.

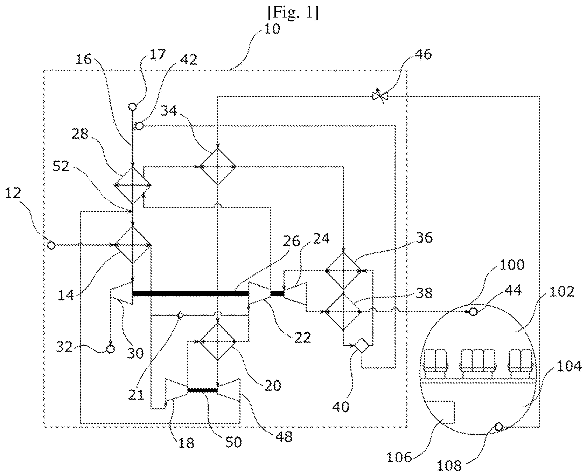

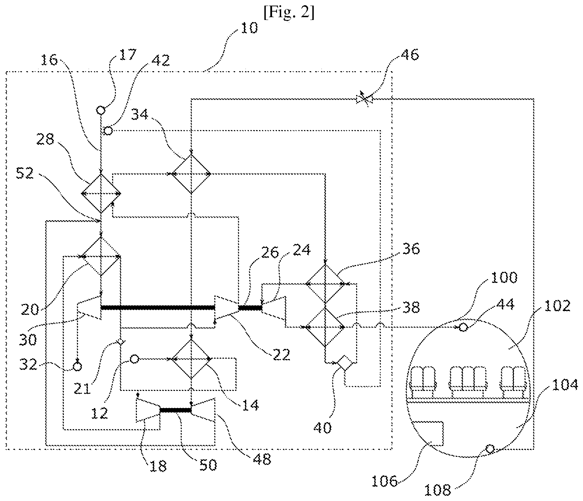

Les figures 1 et 2 illustrent un système 10 de conditionnement d'air selon respectivement un premier mode de réalisation de l'invention et un deuxième mode de réalisation de l'invention.

Le système 10 de conditionnement d'air permet la réfrigération et le conditionnement de l'air pour une cabine 100 d'un aéronef pendant le vol de celui-ci.

Le système 10 de conditionnement d'air est destiné à utiliser de l'air provenant d'au moins un compresseur de l'aéronef, par exemple d'au moins un compresseur d'au moins un moteur de l'aéronef (non représenté), dit air 12 prélevé ou air bleed et de conditionner cet air de sorte à alimenter la cabine 100.

Pour ce faire, le système 10 de conditionnement d'air comprend un ensemble de conduites permettant de mener l'air 12 prélevé jusqu'à la cabine 100 en effectuant différents traitements de conditionnement.

Dans un premier temps, l'air 12 prélevé traverse un échangeur 14 primaire pour être refroidi.

L'air prélevé refroidi sortant de l'échangeur 14 primaire est ensuite pré-compressé dans un pré-compresseur 18.

En aval de ce pré-compresseur, l'air prélevé pré-compressé traverse un échangeur 20 intermédiaire pour être de nouveau refroidi. L'échangeur intermédiaire et le pré-compresseur peuvent être contournés via un clapet 21 de contournement selon les phases de vol, si la pré-compression n'est pas nécessaire.

L'air prélevé pré-compressé et refroidi est ensuite compressé dans un compresseur 22 principal.

Dans ces modes de réalisation, le compresseur 22 principal fait partie d'une turbomachine comprenant ledit compresseur 22 principal relié à une turbine 24 principale par un arbre 26 principal. Selon d'autres modes de réalisation, le compresseur 22 principal et la turbine 24 principale peuvent ne pas être reliés. En particulier, la turbine 24 principale peut par exemple former un turbomoteur avec le pré-compresseur 18.

L'air prélevé compressé traverse ensuite un échangeur 28 principal alimenté par de l'air 16 dynamique prélevé à l'extérieur de l'aéronef par une entrée 17.

L'air 16 dynamique est mis en mouvement par un ventilateur 30 entrainé par l'arbre de la turbomachine. L'air est ensuite rejeté vers l'extérieur 32.

L'air prélevé sortant de l'échangeur 28 principal traverse un échangeur 34 secondaire pour être à nouveau refroidi.

En sortie de cet échangeur 34 secondaire, l'air prélevé traverse une boucle d'extraction d'eau comprenant un premier échangeur 36 de boucle et un deuxième échangeur 38 de boucle, la turbine 24 principale et un extracteur 40 d'eau. L'eau récupérée de l'extracteur d'eau peut être utilisée pour être injectée dans le canal d'air dynamique par un injecteur 42 d'eau.

L'air sortant de la boucle d'extraction d'eau est ainsi conditionné, c'est-à-dire à des conditions de température, de pression et d'humidité acceptables, et est transmis à la cabine de l'aéronef via une entrée 44 d'air conditionné.

Généralement, l'air conditionné est fourni d'abord à une première partie 102 de la cabine accueillant les passagers. L'air circule ensuite dans une deuxième partie 104 de la cabine formant par exemple la soute et pouvant contenir par exemple des équipements 106 électriques.

Au moins une partie de l'air ayant traversé la cabine est récupérée par une conduite 108 de récupération d'air cabine pour être réutilisée dans le système de conditionnement d'air via des conduites de circulation de l'air récupéré. Par exemple, l'air cabine est généralement à environ 25°C dans la première partie 102 de la cabine, et à environ 39°C après avoir circulé dans la deuxième partie 104 de la cabine en fonctionnement nominal.

De l'air de la cabine peut aussi fuir naturellement vers l'extérieur du fait de la pressurisation de la cabine, ou être volontairement évacué vers l'extérieur par une valve (non représentée), si besoin.

Le volume d'air récupéré dans la cabine est régulé par une vanne 46 réglable.

L'air récupéré forme une première source froide pour l'échangeur 34 secondaire de façon à refroidir l'air prélevé en sortie de l'échangeur 28 principal. L'utilisation de cet air récupéré permet de compenser le fait que l'air dynamique est relativement chaud en conditions de vol supersonique par rapport au vol subsonique. L'air récupéré est par exemple à environ 72°C en sortie de l'échangeur 34 secondaire en fonctionnement nominal.

En sortie de l'échangeur 34 secondaire, l'air récupéré est utilisé comme deuxième source froide dans un échangeur thermique.

Selon le premier mode de réalisation de l'invention représenté sur la figure 1, l'air récupéré sortant de l'échangeur 34 secondaire forme une deuxième source froide dans l'échangeur 20 intermédiaire, c'est-à-dire que l'échangeur thermique est formé par l'échangeur 20 intermédiaire. L'échangeur 14 primaire est alimenté par de l'air 16 dynamique en aval du passage dudit air 16 dynamique dans l'échangeur 28 principal.

L'air récupéré entrant par exemple à environ 72°C sort à environ 183°C en fonctionnement nominal ; l'air prélevé traversant l'échangeur 20 intermédiaire passe lui d'environ 244°C (en sortie du pré-compresseur) à environ 170°C.

Selon le premier mode de réalisation de l'invention représenté sur la figure 2, l'air récupéré sortant de l'échangeur 34 secondaire forme une deuxième source froide dans l'échangeur 14 primaire, c'est-à-dire que l'échangeur thermique est formé par l'échangeur 14 primaire. L'échangeur 20 intermédiaire est alimenté par de l'air 16 dynamique en aval du passage dudit air 16 dynamique dans l'échangeur 28 principal.

Suite à la traversée de l'échangeur 34 secondaire et de l'échangeur 20 intermédiaire dans le premier mode de réalisation, ou de l'échangeur 14 primaire dans le deuxième mode de réalisation, l'air récupéré est réchauffé et forme ainsi une source d'énergie qui est exploitée par la traversée d'une turbine 48 de récupération d'énergie. La turbine 48 de récupération d'énergie peut par exemple transmettre l'énergie récupérée au pré-compresseur 18 via un arbre 50 de récupération d'énergie. L'air récupéré sortant de la turbine 48 de récupération d'énergie est par exemple à environ 68°C en fonctionnement nominal.

En sortie de la turbine de récupération d'énergie, l'air récupéré peut être rejeté par une ouverture 52 directement dans le canal de circulation de l'air dynamique. Dans ce mode de réalisation, l'ouverture 52 est configurée de sorte que l'air récupéré soit rejeté en aval de l'échangeur 28 principal et en amont de l'échangeur 14 primaire dans le premier mode de réalisation représenté en référence avec la figure 1, et en amont de l'échangeur 20 intermédiaire dans le deuxième mode de réalisation représenté en référence avec la figure 2.

## Revendications

1. Système de conditionnement d'air d'une cabine (100) d'un aéronef, comprenant :
- un échangeur (14) primaire configuré pour refroidir un air (12) prélevé provenant d'au moins un compresseur de l'aéronef,
- un pré-compresseur (18) configuré pour pré-compresser l'air prélevé refroidi,
- un échangeur (20) intermédiaire, configuré pour refroidir l'air pré-compressé provenant du pré-compresseur (18),
- un compresseur (22) principal configuré pour recevoir ledit air prélevé pré-compressé refroidi par l'échangeur intermédiaire et compresser celui-ci,
- un échangeur (28) principal configuré pour refroidir l'air prélevé compressé par un air (16) dynamique prélevé à l'extérieur de l'aéronef, et
- une boucle d'extraction d'eau intégrant une turbine (24) principale et configurée pour extraire l'eau de l'air prélevé compressé refroidi et alimenter la cabine (100) de l'aéronef,
**caractérisé en ce qu'**il comprend une conduite (108) de récupération d'au moins une partie de l'air de la cabine après son passage dans la cabine, et des conduites de circulation de l'air récupéré configurées pour que l'air récupéré traverse, successivement :
- un échangeur (34) secondaire, l'air récupéré formant une première source froide dans ledit échangeur secondaire (34) pour refroidir de nouveau l'air prélevé en aval de l'échangeur (28) principal et en amont de la boucle d'extraction d'eau,
- un échangeur (14 ; 20) thermique, l'air récupéré formant une deuxième source froide dans ledit échangeur (14 ; 20) thermique pour refroidir l'air prélevé, en amont ou en aval du pré-compresseur (18), l'échangeur thermique étant soit formé par l'échangeur (20) intermédiaire et une source froide de l'échangeur (14) primaire est
- formée par l'air dynamique (16), soit formé par l'échangeur (14) primaire et une source froide de l'échangeur (20) intermédiaire est formée par l'air dynamique,
- une turbine (48) de récupération d'énergie, l'air récupéré formant une source d'énergie suite à son passage dans l'échangeur (34) secondaire puis l'échangeur (14 ; 20) thermique.

2. Système de conditionnement d'air selon la revendication 1, **caractérisé en ce que** la turbine (48) de récupération d'énergie est reliée mécaniquement au pré-compresseur (18) par un arbre (26) de transmission, de sorte que l'énergie récupérée par la turbine (48) de récupération d'énergie soit transmise au pré-compresseur (18).

3. Système de conditionnement d'air selon l'une des revendications 1 ou 2, **caractérisé en ce que** les conduites de circulation de l'air récupéré sont configurées pour que, en sortie de la turbine (48) de récupération d'énergie, au moins une partie de l'air récupéré soit rejetée dans un canal dans lequel circule l'air dynamique, dit canal (16) de circulation d'air dynamique.

4. Système de conditionnement d'air selon la revendication 3, **caractérisé en ce que** ladite partie de l'air rejeté dans ledit canal (16) de circulation d'air dynamique est rejetée en aval du passage de l'air dynamique dans l'échangeur (28) principal et en amont du passage de l'air dynamique dans l'échangeur (14) primaire ou l'échangeur (20) intermédiaire.

5. Système de conditionnement d'air selon l'une des revendications 1 à 4, **caractérisé en ce que** les conduites de circulation de l'air récupéré sont configurées pour que, en sortie de la turbine (48) de récupération d'énergie, au moins une partie de l'air récupéré soit destinée au refroidissement d'un circuit haute température de l'aéronef.

6. Système de conditionnement d'air selon l'une des revendications 1 à 5, **caractérisé en ce que** l'air fourni par au moins un compresseur de l'aéronef est fourni par au moins un compresseur d'un moteur de l'aéronef.

7. Système de conditionnement d'air selon l'une des revendications 1 à 5, **caractérisé en ce que** l'air fourni par au moins un compresseur de l'aéronef est fourni par un compresseur actionné par un moteur électrique.

8. Aéronef, comprenant une cabine et un système de conditionnement d'air selon l'une des revendications 1 à 7 configuré pour alimenter la cabine en air conditionné.

## Patentansprüche

1. Klimaanlage für eine Flugzeugkabine (100), welches umfasst:
- einen Primärtauscher (14), der ausgestaltet ist, Zapfluft (12) von mindestens einem Verdichter des Flugzeugs zu kühlen,
- einen Vorverdichter (18), der ausgestaltet ist, die gekühlte Zapfluft vor zu komprimieren,
- einen Zwischentauscher (20), der ausgestaltet ist, die vorkomprimierte Luft aus dem Vorverdichter (18) zu kühlen,
- einen Hauptverdichter (22), der ausgestaltet ist, die von dem Zwischentauscher gekühlte vorkomprimierte Zapfluft zu empfangen und die Luft zu komprimieren,
- einen Haupttauscher (28), der ausgestaltet ist, die komprimierte Zapfluft mit Hilfe von Stauluft (16) zu kühlen, die von außerhalb des Flugzeugs entnommen wird, und
- einen Wasserentnahmekreislauf, der eine Hauptturbine (24) umfasst und ausgestaltet ist, Wasser aus der gekühlten und komprimierten Zapfluft zu entnehmen und die Kabine (100) des Flugzeugs zu versorgen,
**dadurch gekennzeichnet, dass** diese eine Leitung (108) zur Rückgewinnung mindestens eines Teils der Luft aus der Kabine, nachdem diese die Kabine durchströmt hat, und Zirkulationsleitungen für die rückgewonnene Luft umfasst, die ausgestaltet sind, dass die rückgewonnene Luft nacheinander durchläuft:
- einen Sekundärtauscher (34), worin die rückgewonnene Luft in diesem Sekundärtauscher (34) eine erste Kältequelle bildet, um die Zapfluft stromabwärts des Haupttauschers (28) und stromaufwärts des Wasserentnahmekreislaufs wieder abzukühlen,
- einen Wärmetauscher (14; 20), worin die rückgewonnene Luft eine zweite Kältequelle in diesem Wärmetauscher (14; 20) bildet, um die Zapfluft stromaufwärts oder stromabwärts des Vorverdichters (18) zu kühlen, worin der Wärmetauscher entweder durch den Zwischentauscher (20) ausgebildet wird, und die Stauluft (16) eine Kältequelle des Primärtauschers (14) bildet, oder durch den Primärtauscher (14) ausgebildet wird, und die Stauluft eine Kältequelle des Zwischentauschers (20) bildet,
- eine Energierückgewinnungsturbine (48), worin die rückgewonnene Luft eine Energiequelle bildet, nachdem sie den Sekundärtauscher (34) und dann den Wärmetauscher (14; 20) durchlaufen hat.

2. Klimaanlage nach Anspruch 1, **dadurch gekennzeichnet, dass** die Energierückgewinnungsturbine (48) durch eine Übertragungswelle (26) mit dem Vorverdichter (18) mechanisch verbunden ist, so dass die von der Energierückgewinnungsturbine (48) zurückgewonnene Energie auf den Vorverdichter (18) übertragen wird.

3. Klimaanlage nach Anspruch 1 oder Anspruch 2, **dadurch gekennzeichnet, dass** die Zirkulationsleitungen für die zurückgewonnene Luft ausgestaltet sind, dass beim Austritt aus der Energierückgewinnungsturbine (48) mindestens ein Teil der zurückgewonnenen Luft in einen als Stauluft-Zirkulationskanal (16) bezeichneten Kanal abgeleitet wird, in dem Stauluft zirkuliert.

4. Klimaanlage nach Anspruch 3, **dadurch gekennzeichnet, dass** der Teil der Luft, der in den Stauluft-Zirkulationskanal (16) abgeleitet wird, stromabwärts des Durchgangs der Stauluft durch den Haupttauscher (28) und stromaufwärts des Durchgangs der Stauluft durch den Primärtauscher (14) oder den Zwischentauscher (20) abgeleitet wird.

5. Klimaanlage nach einem der Ansprüche 1 bis 4, **dadurch gekennzeichnet, dass** die Zirkulationsleitungen für die zurückgewonnene Luft ausgestaltet sind, dass beim Verlassen der Energierückgewinnungsturbine (48) zumindest ein Teil der zurückgewonnenen Luft zur Kühlung eines Hochtemperaturkreislaufs des Flugzeugs bestimmt ist.

6. Klimaanlage nach einem der Ansprüche 1 bis 5, **dadurch gekennzeichnet, dass** die von mindestens einem Verdichter des Flugzeugs zugeführte Luft von mindestens einem Verdichter eines Triebwerks des Flugzeugs zugeführt wird.

7. Klimaanlage nach einem der Ansprüche 1 bis 5, **dadurch gekennzeichnet, dass** die von mindestens einem Verdichter des Flugzeugs gelieferte Luft von einem Verdichter geliefert wird, der von einem Elektromotor angetrieben wird.

8. Luftfahrzeug mit einer Kabine und einer Klimaanlage nach einem der Ansprüche 1 bis 7, die ausgestaltet ist, die Kabine mit klimatisierter Luft zu versorgen.

## Claims

1. Air conditioning system for an aircraft cabin (100), comprising:
- a primary exchanger (14) configured to cool bleed air (12) from at least one compressor of the aircraft,
- a pre-compressor (18) configured to pre-compress the cooled bleed air,
- an intermediate exchanger (20) configured to cool the pre-compressed air from the pre-compressor (18),
- a main compressor (22) configured to receive said pre-compressed bleed air cooled by the intermediate exchanger and compress said air,
- a main exchanger (28) configured to cool the compressed bleed air by means of ram air (16) taken from outside the aircraft, and
- a water extraction loop that includes a main turbine (24) and is configured to extract water from the cooled, compressed bleed air and supply the cabin (100) of the aircraft,
**characterized in that** it comprises a duct (108) for recovering at least part of the air from the cabin after it has passed through the cabin, and recovered air circulation ducts configured so that the recovered air successively passes through:
- a secondary exchanger (34), the recovered air forming a first cold source in said secondary exchanger (34) for cooling the bleed air again downstream of the main exchanger (28) and upstream of the water extraction loop,
- a heat exchanger (14; 20), the recovered air forming a second cold source in said heat exchanger (14; 20) for cooling the bleed air upstream or downstream of the pre-compressor (18), the heat exchanger either being formed by the intermediate exchanger (20), with the ram air (16) forming a cold source of the primary exchanger (14), or being formed by the primary exchanger (14), with the ram air forming a cold source of the intermediate exchanger (20),
- an energy recovery turbine (48), the recovered air forming a source of energy after passing through the secondary exchanger (34) and then the heat exchanger (14; 20).

2. Air conditioning system according to claim 1, **characterized in that** the energy recovery turbine (48) is mechanically connected to the pre-compressor (18) by a transmission shaft (26) such that the energy recovered by the energy recovery turbine (48) is transmitted to the pre-compressor (18).

3. Air conditioning system according to either claim 1 or claim 2, **characterized in that** the recovered air circulation ducts are configured so that, upon exiting the energy recovery turbine (48), at least part of the recovered air is discharged into a channel, referred to as a ram air circulation channel (16), in which ram air circulates.

4. Air conditioning system according to claim 3, **characterized in that** said part of the air discharged into said ram air circulation channel (16) is discharged downstream of the passage of ram air through the main exchanger (28) and upstream of the passage of ram air through the primary exchanger (14) or the intermediate exchanger (20).

5. Air conditioning system according to any of claims 1 to 4, **characterized in that** the recovered air circulation ducts are configured so that, upon exiting the energy recovery turbine (48), at least part of the recovered air is intended for cooling a high-temperature circuit of the aircraft.

6. Air conditioning system according to any of claims 1 to 5, **characterized in that** the air supplied by at least one compressor of the aircraft is supplied by at least one compressor of an engine of the aircraft.

7. Air conditioning system according to any of claims 1 to 5, **characterized in that** the air supplied by at least one compressor of the aircraft is supplied by a compressor actuated by an electric motor.

8. Aircraft comprising a cabin and an air conditioning system according to any of claims 1 to 7 configured to supply the cabin with conditioned air.
